# EUROPÄISCHE PATENTANMELDUNG

(11) **EP 1 617 268 A2**
(43) Veröffentlichungstag der Anmeldung: **18.01.2006**
(21) Anmeldenummer: 05012839.6
(22) Anmeldetag: 15.06.2005
(51) Int. Cl.: G02B 21/00

(54) **Lichtrastermikroskop mit einem Beleuchtungsmodul**

(30) Priorität: 16.07.2004 DE 102004034987
(71) Anmelder: CARL ZEISS JENA GmbH, 07745 Jena (DE)
(72) Erfinder: Wolleschensky, Ralf, 99510 Apolda (DE); Funk, Jörg-Michael, 07743 Jena (DE); Engelmann, Ralf, 07745 Jena (DE); Wilhelm, Stefan, 07743 Jena (DE); Zimmermann, Bernhard, 07743 Jena (DE)
(74) Vertreter: Beck, Bernard

(57) **Zusammenfassung**

Lichtrastermikroskop mit mindestens einem Beleuchtungsmodul, wobei Mittel zur variablen Aufteilung des Laserlichts auf mindestens zwei Beleuchtungskanäle vorgesehen sind und eine gemeinsame Beleuchtung einer Probe auf gleichen oder unterschiedlichen Probenbereichen erfolgt

## Beschreibung

Die erfindungsgemäße Verwendung von zwei oder mehreren Scanmodulen ist insbesondere sinnvoll für folgende Methodenkombinationen (alle genannten Untersuchungen würden von einem Kombisystem mit gemeinsamem Lasermodul deutlich profitieren, da Aufwand, Reproduzierbarkeit und Flexibilität gegenüber Einzelsystemen deutlich optimiert wären):
1. Methodenkombination Imaging <-> fast scanning (z.B. hochauflösender Punkt- und schneller Disk-Scanner)
   Egner et al., J. Microsc. 2002, 206: 24-32 vergleichen die Effizienz und Auflösung von Spinning-Disk und multifokalen Multiphotonen-Mikroskopen; je nach Präparaten wären beide Systeme sinnvoll.
   Stephens und Allan, Science 2003, 300:82-86 stellen die Vorteile verschiedener licht- und konfokalmikroskopischer Techniken für live cell Imaging dar; trotz verschiedener Detektionswege kommt bei hochwertigen Systemen meist ein Laser als Lichtquelle zum Einsatz.
2. Methodenkombination Imaging <-> manipulation (z.B. Einkopplung UV für Uncaging / NLO)
   Knight et al., Am J. Physiol. Cell Physiol. 2003, 284: C1083-1089 beschreiben Ca2+-Imaging mit Lichtaktivierung durch Laser; der Laser könnte auch für Imaging genutzt werden.
   Denk, J. Neurisc. Methods 1997, 72: 39-42 beschreibt die Verwendung gepulster Quecksilberdampflampen für die Freisetzung von Pharmaka; würde hier ein Laser genutzt, wären Positionierbarkeit und Effizienz deutlich verbessert.
   Wang und Augustine, Neuron 1995, 15: 755-760 beschreiben schnelles Ca2+-lmaging mit lokaler Freisetzung von Pharmaka durch Laserlicht; der Laser könnte auch für Imaging genutzt werden.
3. Methodenkombination Imaging <-> Spektroskopie FCS (Unter Verwendung des gleichen VIS-Lasers)
   Quing et al., Appl. Opt. 2003, 42: 2987-2994 beschreiben Bakterienuntersuchungen mit FCS in Wasser; der Laser könnte sowohl die Bildgebungs- als auch die FCS-Komponente versorgen.
   Bigelow et al., Opt. Lett. 2003, 28: 695-697 beschreiben die Untersuchung von Tumorzellen mit konfokaler Fluoreszenzspektroskopie und Fluoreszenzanisotropie; der Laser könnte sowohl die Bildgebungs- wie auch die Spektroskopiekomponente versorgen.
4. Paralleles Imaging an mehr als einer Mikroskopanordnung (Unter Verwendung des gleichen gepulsten NIR-Lasers)
   McLellan et al., J. Neurosc. 2003, 23: 2212-2217 beschreiben die Verwendung von in-vivo Multiphotonen-Mikroskopie zur Darstellung von Amyloid-Plaques in Alzheimer-Tiermodellen; die Mikroskopaufbauten sind speziell an die Tiermodelle angepasst, die Verwendung mehrerer Aufbauten mit gemeinsamem Laser würde den Durchsatz deutlich steigern.
   Zipfel et al., Proc. Natl. Acad. Sci USA 2003, 100: 7075-7080 beschreiben die Untersuchung von Autofluoreszenzen in lebendem Gewebe mit Multiphotonen- und SHG-Mikroskopie; der Mikroskopaufbau ist durch Spezialanpassungen nicht sehr universell, ein zweiter Aufbau würde die Flexibilität erhöhen.
5. Kombination konfokale- und TIRF-Mikroskopie
   Pollard und Apps, Ann. N.Y. Acad. Sci. 2002, 971: 617-619 beschreiben neue Techniken zur Untersuchung von Exocytose und lonentransport mit TIRF-Mikroskopie; der Imaging-Laser könnte auch für die TIRF-Anregung genutzt werden. Ruckstuhl und Seeger, Appl. Opt., 2003, 42: 3277-3283 beschreiben die konfokale und spektroskopische Untersuchung von Nanopartikeln und Molekülen mit einem neuartigen Spiegelobjektiv in der TIRF-Mikroskopie; durch die Spezialoptik ist der Aufbau nicht sehr universell, ein zweiter Imaging-Aufbau würde die Flexibilität steigem.

Tsuboi et al., Biophys. J. 2002, 83: 172-183 beschreiben die Untersuchung von endocrinen Zellen mit Lasermikroforce- und TIRF-Mikroskopie; der Imaging-Laser könnte auch für die TIRF-Anregung genutzt werden.

In diesem Zusammenhang ist es jeweils vorteilhaft oder sogar notwendig, den Strahlengang auf dem Lasermodul so zu gestalten, dass eine stufenlose / variable Strahlaufteilung zwischen den verwendeten Beleuchtungsmodulen möglich ist. Die Verwendung eines einzigen Lasermoduls ist sinnvoll, um den Geräteaufwand zu reduzieren, und damit effektiv Kosten zu sparen.

Die Ausführung der variablen Strahlaufteilung dient dem Ziel, einzelne Wellenlängen oder Wellenlängenbereiche der Lichtquelle ohne Beeinflussung der restlichen Wellenlängen in verschiedene Strahlwege zu schalten bei gleichzeitiger Sicherstellung der individuellen Linienselektion und Strahlabschwächung. Dies kann auf mehrere verschiedene Arten erfolgen:
1. Aufteilung einer Lichtquelle in mindestens zwei getrennte Strahlengänge mittels eines optischen Elements durch das stufenlos das Teilungsverhältnis am optischen Element den applikativen Erfordernissen flexibel angepasst werden kann, wobei die beiden Strahlengänge eine der Methodenkombinationen 1-4 bedienen, oder alternativ ein Strahlengang in eine Lichtfalle geleitet wird um die verfügbare Laserleistung den applikativen Erfordernissen anzupassen.
   a. : mit mindestens einer Faserkopplung
   b. : mit mindestens einem AOTF für laserlinienselektive Strahlabschwächung
2. Aufteilung einer Lichtquelle in zwei getrennte Strahlengänge , wobei die Aufteilung der Strahlquelle mittels eines Polarisationsstrahlteilers und vorgeschalteter, drehbarer, lambda / 2 Platte oder einem anderen Element, das die Drehung der Polarisation individuell für jeden Laser ermöglicht (liquid crystal, Pockelszelle, Farraday Rotator...) . Durch die über die lambda/2 Platten quasi stufenlos einstellbare Orientierung des E-Vektors (ggf. individuell für jeden Laser), kann das Teilungsverhältnis am Polarisationsstrahlteiler quasi stufenlos eingestellt werden und damit den applikativen Erfordernissen flexibel angepasst werden
   a. : mit mindestens einer Faserkopplung
   b. : mit mindestens einem AOTF für laserlinienselektive Strahlabschwächung
3. Aufteilung einer Lichtquelle in zwei getrennte Strahlengänge , wobei die Aufteilung der Strahlengänge mittels eines oder mehrerer dichroitischerStrahlteiler erfolgt, deren Reflexions,- bzw.
   Transmissionseigenschaften durch manuelles oder motorisches Verkippen verändert werden .
   Das Ändern des Winkels (also z.B. von 45° nach 50°) für den die Schicht konzipiert ist führt zu einer Veränderung der spektralen Eigenschaften, da sich im Schichtsystem (entspricht quasi Fabry Perot Interferometer) die Weglängen ändern, wodurch sich wiederum die Bereiche konstruktiver bzw. destruktiver Interferenz verschieben variabel eingestellt werden können, und wodurch das Teilungsverhältnis den applikativen Erfordernissen flexibel angepasst werden kann.
   a. : mit mindestens einer Faserkopplung
   b. : mit mindestens einem AOTF für laserlinienselektive Strahlabschwächung
4. Aufteilung einer Lichtquelle in zwei getrennte Strahlengänge , wobei die Aufteilung der Strahlengänge mittels eines akusto- optischen oder eines anderen diffraktiven Elements erfolgt, wobei die Beugungseffizienz in eine (+) oder (-) erste Ordnung im Verhältnis zur nullten Ordnung variabel eingestellt werden kann und wodurch das Teilungsverhältnis zwischen nullter Ordnung und (+) oder (-) erster Ordnung den applikativen Erfordernissen flexibel angepasst werden kann.
   a. : mit mindestens einer Faserkopplung
   b. : mit mindestens einem AOTF für laserlinienselektive Strahlabschwächung
5. Aufteilung einer Lichtquelle in zwei getrennte Strahlengänge, wobei die Aufteilung der Strahlengänge mittels eines schnell schaltbaren Spiegels erfolgt. Die Schaltfrequenz sollte dabei in der Größenordnung der Bildaufnahmerate liegen. Um die in die einzelnen Strahlengänge transportierte Energie zu beeinflussen, ist weiterhin eine zur Schaltfrequenz des Spiegels synchronisierte schnell schaltbare Strahlabschwächung für jeden Laser über Liquid Crystal Filter zu integrieren.
6. Wie 5, wobei die Strahlabschwächung dem Laser nachgeordnet mittels akustooptischer oder anderer diffraktiver Bauteile erfolgt.

Der Vorteil der Varianten 1-4 liegt darin, dass beim Umschalten zwischen den Strahlengängen keine Teile bewegt werden müssen und auf diese Weise die volle dynamische Leistungsfähigkeit des Aufbaus erhalten bleibt,

### Beschreibung anhand der Zeichnungen:

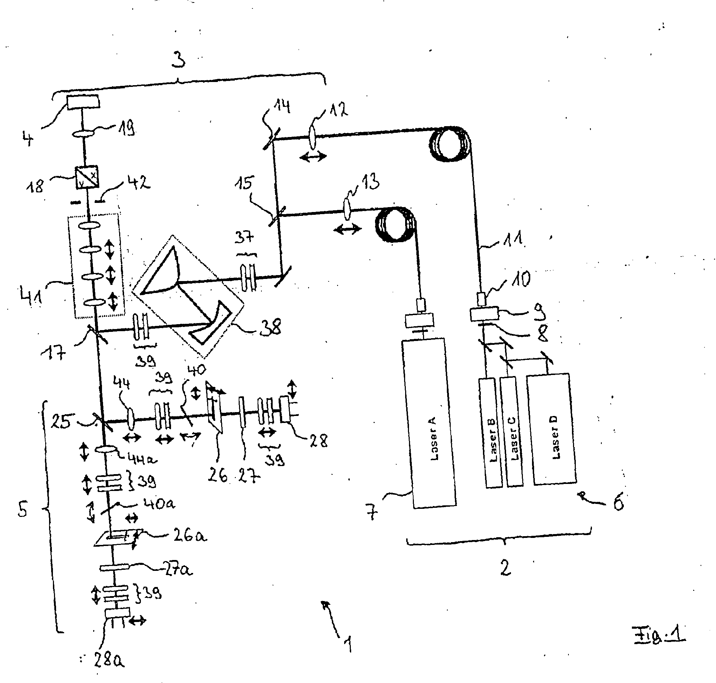

Im folgenden wird ein RT ( real time) Scanner mit Linienabtastung anhand der Zeichnungen Fig.1-4 näher erläutert.
Figur 1 zeigt schematisch ein Laserscanningmikroskop 1, das im wesentlichen aus fünf Komponenten aufgebaut ist: einem Strahlungsquellenmodul 2, das Anregungsstrahlung für die Laserscanningmikroskopie erzeugt, einem Scanmodul 3, das die Anregungsstrahlung konditioniert und zum Scannen über eine Probe geeignet ablenkt, einem zur Vereinfachung nur schematisch gezeigten Mikroskopmodul 4, das die vom Scanmodul bereitgestellte scannende Strahlung in einem mikroskopischen Strahlengang auf eine Probe richtet, sowie einem Detektormodul 5, das optische Strahlung von der Probe erhält und detektiert. Das Detektormodul 5 kann dabei, wie es in Figur 1 dargestellt ist, spektral mehrkanalig ausgeführt sein.
Zur allgemeinen Beschreibung eines punktweise abtastenden Laser Scanning Mikroskopes wird auf DE 19702753A1 verwiesen, die somit Bestandteil der hier vorliegenden Beschreibung ist.
Das Strahlungsquellenmodul 2 erzeugt Beleuchtungsstrahlung, die für die Laserscanningmikroskopie geeignet ist, also insbesondere Strahlung, die Fluoreszenz auslösen kann. Je nach Applikation weist das Strahlungsquellenmodul dazu mehrere Strahlungsquellen auf. In einer dargestellten Ausführungsform werden zwei Laser 6 und 7 im Strahlungsquellenmodul 2 vorgesehen, denen jeweils ein Lichtventil 8 sowie ein Abschwächer 9 nachgeschaltet sind und die ihre Strahlung über ein Koppelstelle 10 in eine Lichtleitfaser 11 einkoppeln. Das Lichtventil 8 wirkt als Strahlablenker, mit dem eine Strahlabschaltung bewirkt werden kann, ohne den Betrieb der Laser in der Lasereinheit 6 bzw. 7 selbst abschalten zu müssen. Das Lichtventil 8 ist beispielsweise als AOTF ausgebildet, das zur Strahlabschaltung den Laserstrahl vor der Einkopplung in die Lichtleitfaser 11 in Richtung einer nicht dargestellten Lichtfalle ablenkt.

In der beispielhaften Darstellung der Figur 1 weist die Lasereinheit 6 drei Laser B, C, D auf, wohingegen die Lasereinheit 7 nur einen Laser A beinhaltet. Die Darstellung ist also beispielhaft für eine Kombination aus Einzel- und Multiwellenlängenlaser, die einzeln oder auch gemeinsam an eine oder mehrere Fasern angekoppelt sind. Auch kann die Ankopplung über mehrere Fasern gleichzeitig erfolgen, deren Strahlung später nach Durchlaufen einer Anpaßoptik durch Farbvereiniger gemischt wird. Es ist somit möglich, verschiedenste Wellenlängen oder-bereiche für die Anregungsstrahlung zu verwenden.

Die in die Lichtleitfaser 11 eingekoppelte Strahlung wird mittels verschieblichen Kollimationsoptiken 12 und 13 über Strahlvereinigungsspiegel 14, 15 zusammengeführt und in einer Strahlformungseinheit hinsichtlich des Strahlprofils verändert.

Die Kollimatoren 12, 13 sorgen dafür, daß die vom Strahlungsquellenmodul 2 an das Scanmodul 3 zugeführte Strahlung in einen Unendlichstrahlengang kollimiert wird. Dies erfolgt jeweils vorteilhaft mit einer einzelnen Linse, die durch Verschiebung entlang der optischen Achse unter Steuerung (einer nicht dargestellten) zentralen Ansteuereinheit eine Fokussierungsfunktion hat, indem der Abstand zwischen Kollimator 12, 13 und dem jeweiligen Ende der Lichtleitfaser veränderbar ist.

Die Strahlformungseinheit, welche später noch eingehend erläutert wird, erzeugt aus dem rotationssymmetrischen, gaußförmig profilierten Laserstrahl, wie er nach den Strahlvereinigungsspiegeln 14, 15 vorliegt, einen zeilenförmigen Strahl, der nicht mehr rotationssymmetrisch ist, sondern im Querschnitt zur Erzeugung eines rechteckig beleuchteten Feldes geeignet ist.

Dieser auch als zeilenförmig bezeichnete Beleuchtungsstrahl dient als Anregungsstrahlung und wird über einen Hauptfarbteiler 17 und eine noch zu beschreibende Zoomoptik zu einem Scanner 18 geleitet. Auf den Hauptfarbteiler wird später ebenfalls noch eingegangen, hier sei lediglich erwähnt, daß er die Funktion hat, vom Mikroskopmodul 4 zurückkehrende Probenstrahlung von der Anregungsstrahlung zu trennen.

Der Scanner 18 lenkt den zeilenförmigen Strahl ein- oder zweiachsig ab, wonach er durch ein Scanobjektiv 19 sowie eine Tubuslinse und ein Objektiv des Mikroskopmoduls 4 in einen Fokus 22 gebündelt wird, der in einem Präparat bzw. in einer Probe liegt. Die optische Abbildung erfolgt dabei so, daß die Probe in einer Brennlinie mit Anregungsstrahlung beleuchtet wird.

Derart im linienförmigen Fokus angeregte Fluoreszenz-Strahlung gelangt über Objektiv und Tubuslinse des Mikroskopmoduls 4 und das Scanobjektiv 19 zurück zum Scanner 18, so daß in Rückrichtung nach dem Scanner 18 wieder ein ruhender Strahl vorliegt. Man spricht deshalb auch davon, daß der Scanner 18 die Fluoreszenz-Strahlung descannt.

Der Hauptfarbteiler 17 läßt die in anderen Wellenlängenbereichen als die Anregungsstrahlung liegende Fluoreszenz-Strahlung passieren, so daß sie über einen Umlenkspiegel 24 im Detektormodul 5 umgelenkt und dann analysiert werden kann. Das Detektormodul 5 weist in der Ausführunsform der Figur 1 mehrere spektrale Kanäle auf, d.h. die vom Umlenkspiegel 24 kommende Fluoreszenz-Strahlung wird in einem Nebenfarbteiler 25 in zwei spektrale Kanäle aufgeteilt.

Jeder spektrale Kanal verfügt über eine Schlitzblende 26, die eine konfokale oder teil-konfokale Abbildung bezüglich der Probe 23 realisiert und deren Größe die Tiefenschärfe, mit der die Fluoreszenz-Strahlung detektiert werden kann, festlegt. Die Geometrie der Schlitzblende 26 bestimmt somit die Schnittebene innerhalb des (dicken) Präparates, aus der Fluoreszenz-Strahlung detektiert wird.

Der Schlitzblende 26 ist noch ein Blockfilter 27 nachgeordnet, das unerwünschte, in das Detektormodul 5 gelangte Anregungsstrahlung abblockt. Die derart abseparierte, aus einem bestimmten Tiefenabschnitt stammende, zeilenförmig aufgefächerte Strahlung wird dann von einem geeigneten Detektor 28 analysiert. Analog zum geschilderten Farbkanal ist auch der zweite spektrale Detektionskanal aufgebaut, der ebenfalls eine Schlitzblende 26a, ein Blockfilter 27a sowie einen Detektor 28a umfaßt.

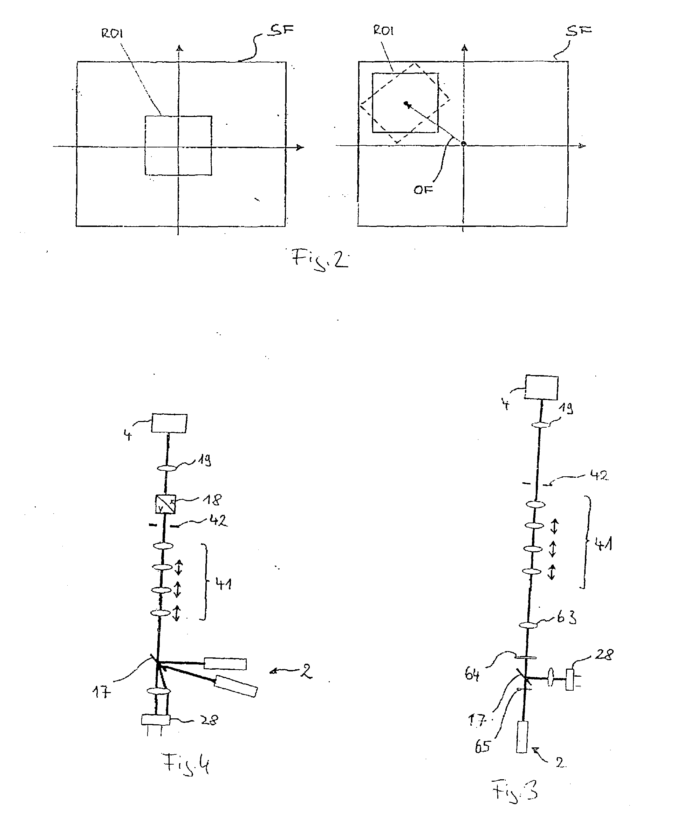

Die Verwendung einer konfokalen Schlitz-Apertur im Detektormodul 5 ist nur beispielhaft. Natürlich kann auch ein Einzelpunktscanner realisiert sein. Die Schlitzblenden 26, 26a sind dann durch Lochblenden ersetzt und die Strahlformungseinheit kann entfallen. Im übrigen sind für eine solche Bauweise alle Optiken rotationssymmetrisch ausgeführt. Dann können natürlich statt einer Einzelpunktabtastung und -detektion auch prinzipiell beliebige Mehrpunktanordnungen, wie Punktwolken oder Nipkow-Scheibenkonzepte, verwendet werden, wie sie später noch anhand Fig. 3 und 4 erläutert werden. Wesentlich ist dann allerdings, daß der Detektor 28 ortsauflösend ist, da eine parallele Erfassung mehrerer Probenpunkte beim Durchlauf des Scanners erfolgt.

In Figur 1 ist zu sehen, daß die nach den beweglichen, d.h. verschieblichen Kollimatoren 12 und 13 vorliegenden Gauß'schen Strahlenbündel über eine Spiegeltreppe in Form der Strahlvereinigungsspiegel 14, 16 vereinigt und bei der gezeigten Bauweise mit konfokaler Schlitzblende anschließend in ein Strahlbündel mit rechteckigem Strahlquerschnitt konvertiert werden. In der Ausführungsform der Figur 1 wird in der Strahlformungseinheit ein Zylinderteleskop 37 verwendet, dem eine Asphäreneinheit 38 nachgeordnet ist, auf das eine Zylinderoptik 39 folgt.

Nach der Umformung liegt ein Strahl vor, der in einer Profilebene im wesentlichen ein rechteckiges Feld ausleuchtet, wobei die Intensitätsverteilung entlang der Feldlängsachse nicht gaußförmig, sondern kastenförmig ist.

Die Beleuchtungsanordnung mit der Asphäreneinheit 38 kann zur gleichmäßigen Füllung einer Pupille zwischen einer Tubuslinse und einem Objektiv dienen. Damit kann die optische Auflösung des Objektivs voll ausgeschöpft werden. Diese Variante ist somit auch zweckmäßig in einem Einzelpunkt oder Multipunkt scannenden Mikroskopsystem, z. B. in einem linien-scannenden System (bei letzterem zusätzlich zu der Achse, in der auf bzw. in die Probe fokussiert wird).

Die z. B. linienförmig konditionierte Anregungsstrahlung wird auf den Hauptfarbteiler 17 gelenkt. Dieser ist in einer bevorzugten Ausführungsform als spektral-neutraler Teilerspiegel gemäß der DE 10257237 A1 ausgeführt, deren Offenbarungsgehalt hier vollumfänglich einbezogen ist. Der Begriff "Farbteiler" umfaßt also auch nichtspektral wirkende Teilersysteme. Anstelle des beschriebenen spektral unabhängigen Farbteilers kann auch ein homogener Neutralteiler (z.B. 50/50, 70/30, 80/20 o.ä.) oder ein dichroitischer Teiler Verwendung finden. Damit applikationsabhängig eine Auswahl möglich ist, ist der Hauptfarbteiler vorzugsweise mit einer Mechanik versehen, die einen einfachen Wechsel ermöglicht, beispielsweise durch ein entsprechendes Teilerrad, das einzelne, austauschbare Teiler enthält.

Ein dichroitischer Hauptfarbteiler ist besonders dann vorteilhaft, wenn kohärente, d. h. gerichtete Strahlung detektiert werden soll, wie z.B. Reflexion, Stokes'sche bzw. anti-Stokes'sche Raman-Spektroskopie, kohärente Raman-Prozesse höherer Ordnung, allgemein parametrische nicht-lineare optische Prozesse, wie Second Harmonic Generation, Third Harmonic Generation, Sum Frequency Generation, Zwei- und Mehrfotonenabsorption bzw. Fluoreszenz. Mehrere dieser Verfahren der nicht-linearen optischen Spektroskopie erfordern den Einsatz zweier oder mehrer Laserstrahlen, die kollinear überlagert werden. Hierbei erweist sich die dargestellte Strahlvereinigung der Strahlung mehrerer Laser als besonders vorteilhaft. Grundsätzlich können die in der Fluoreszenzmikroskopie weitverbreiteten dichroitischen Strahlteiler verwendet werden. Auch ist es für Raman-Mikroskopie vorteilhaft vor den Detektoren holografische Notch-Teiler oder -Filter zu Unterdrückung des Rayleigh-Streuanteils zu verwenden.

In der Ausführungsform der Figur 1 wird die Anregungsstrahlung bzw. Beleuchtungsstrahlung dem Scanner 18 über eine motorisch steuerbare Zoom-Optik 41 zugeführt. Damit kann der Zoom-Faktor angepaßt werden und das abgetastete Sehfeld ist in einem bestimmten Verstellbereich kontinuierlich variierbar. Besonders vorteilhaft ist eine Zoom-Optik, bei der während Anpassung der Fokuslage und des Abbildungsmaßstabes die Pupillenlage im kontinuierlichen Durchstimmvorgang erhalten bleibt. Die in Figur 1 dargestellten, durch Pfeile symbolisierten, drei motorischen Freitheitsgrade der Zoom-Optik 41 entsprechen genau der Zahl der Freitheitsgrade, die zur Anpassung der drei Parameter, Abbildungsmaßstab, Fokus-, Pupillenlage, vorgesehen sind. Besonders bevorzugt ist eine Zoom-Optik 41, an deren ausgangsseitigen Pupille eine feste Blende 42 angeordnet ist. In einer praktischen einfachen Realisierung kann die Blende 42 auch durch die Begrenzung der Spiegelfläche des Scanners 18 vorgegeben sein. Die ausgangsseitige Blende 42 mit der Zoom-Optik 41 erreicht, daß unabhängig vom Verstellen der Zoomvergrößerung immer ein festgelegter Pupillendurchmesser auf das Scanobjektiv 19 abgebildet wird. Somit bleibt die Objektivpupille auch bei beliebiger Verstellung der Zoomoptik 41 vollständig ausgeleuchtet. Die Verwendung einer eigenständigen Blende 42 verhindert vorteilhaft das Auftreten ungewollter Streustrahlung im Bereich des Scanners 18.

Mit der Zoom-Optik 41 wirkt das Zylinderteleskop 37 zusammen, das ebenfalls motorisch betätigbar ist und der Asphäreneinheit 38 vorgeordnet ist. Dies ist in der Ausführungsform der Figur 2 aus Gründen eines kompakten Aufbaus gewählt, muß aber nicht so sein.

Wird ein Zoom-Faktor kleiner 1,0 gewünscht, wird das Zylinderteleskop 37 automatisch in den optischen Strahlengang eingeschwenkt. Es verhindert, daß die Aperturblende 42 unvollständig ausgeleuchtet ist, wenn das Zoomobjektiv 41 verkleinert ist. Das einschwenkbare Zylinderteleskop 37 gewährleistet somit, daß auch bei Zoom-Faktoren kleiner 1, d. h. unabhängig von der Verstellung der Zoomoptik 41 am Ort der Objektivpupille stets eine Beleuchtungslinie konstanter Länge vorliegt. Im Vergleich zu einem einfachen Sehfeld-Zoom sind somit Laserleistungsverluste in dem Beleuchtungsstrahl vermieden.

Da beim Einschwenken des Zylinderteleskops 37 ein Bildhelligkeitssprung in der Beleuchtungslinie unvermeidlich ist, ist in der (nicht dargestellten) Steuereinheit vorgesehen, daß die Vorschubgeschwindigkeit des Scanners 18 oder ein Verstärkungsfaktor der Detektoren im Detektormodul 5 bei aktiviertem Zylinderteleskop 37 entsprechend angepaßt ist, um die Bildhelligkeit konstant zu halten.

Neben der motorisch angetriebenen Zoomoptik 41 sowie dem motorisch aktivierbaren Zylinderteleskop 37 sind auch im Detektormodul 5 des Laserscanningmikroskops der Figur 1 femsteuerbare Justierelemente vorgesehen. Zur Kompensation von Farblängsfehlern sind beispielsweise vor der Schlitzblende eine Rundoptik 44 sowie eine Zylinderoptik 39 und unmittelbar vor dem Detektor 28 eine Zylinderoptik 39 vorgesehen, die jeweils in axialer Richtung motorisch verschiebbar sind.

Zusätzlich ist zur Kompensation eine Korrektureinheit 40 vorgesehen, die nachfolgend kurz beschrieben wird.

Die Schlitzblende 26 bildet zusammen mit einer vorgeordneten Rundoptik 44 sowie der ebenfalls vorgeordneten ersten Zylinderoptik 39 sowie der nachgeordneten zweiten Zylinderoptik ein Pinhole-Objektiv der Detektoranordnung 5, wobei das Pinhole hier durch die Schlitzblende 26 realisiert ist. Um eine unerwünschte Detektion von im System reflektierter Anregungsstrahlung zu vermeiden, ist der zweiten Zylinderlinse 39 noch das Blockfilter 27 vorgeschaltet, das über geeignete spektrale Eigenschaften verfügt, um lediglich gewünschte Fluoreszenzstrahlung zum Detektor 28, 28a gelangen zu lassen.

Ein Wechsel des Farbteilers 25 oder des Blockfilters 27 bringt unvermeidlich einen gewissen Kipp- oder Keilfehler bei Einschwenken mit sich. Der Farbteiler kann einen Fehler zwischen Probenbereich und Schlitzblende 26, das Blockfilter 27 einen Fehler zwischen Schlitzblende 26 und Detektor 28 nach sich ziehen. Um zu verhindern, daß dann eine Neujustierung der Lage der Schlitzblende 26 bzw. des Detektors 28 erforderlich ist, ist zwischen der Rundoptik 44 und der Schlitzblende 26, d.h. im Abbildungsstrahlengang zwischen Probe und Detektor 28 eine planparallele Platte 40 angeordnet, die unter Steuerung eines Controllers in verschiedene Kippstellungen gebracht werden kann. Die planparallele Platte 40 ist dazu in einer geeigneten Halterung verstellbar angebracht.

Figur 2 zeigt, wie mit Hilfe der Zoom-Optik 41 innerhalb des zur Verfügung stehenden maximalen Scanfeldes SF ein Bereich (region of interest) ROI ausgewählt werden kann. Beläßt man die Ansteuerung des Scanners 18 so, daß die Amplitude sich nicht verändert, wie dies beispielsweise bei Resonanz-Scanner zwingend erforderlich ist, bewirkt eine an der Zoom-Optik eingestellte Vergrößerung größer 1,0 eine Einengung des ausgewählten Bereiches ROI zentriert um die optische Achse des Scanfeldes SF.
Resonanzscanner sind beispielsweise in Pawley, Handbook of Biological Confocal Microscopy , Plenum Press 1994, Seite 461ff beschrieben.
Steuert man den Scanner so an, daß er ein Feld asymmetrisch zur optischen Achse, d. h. zur Ruhelage der Scannerspiegel abtastet, so erhält man im Zusammenhang mit einer Zoomwirkung eine Offsetverschiebung OF des ausgewählten Bereiches ROI. Durch die bereits erwähnte Wirkung des Scanners 18, zu descannen, und durch den nochmaligen Durchlauf durch die Zoom-Optik 41, wird die Auswahl des interessierenden Bereiches ROI im Detektionsstrahlengang wieder in Richtung auf den Detektor hin aufgehoben. Somit kann man eine beliebige innerhalb des Scanbildes SF liegende Auswahl für den Bereich ROI treffen. Zusätzlich kann man für verschiedene Auswahlen des Bereiches ROI Bilder gewinnen und diese dann zu einem hochauflösenden Bild zusammensetzen.

Möchte man den ausgewählten Bereich ROI nicht nur um einen Offset OF gegenüber der optischen Achse verschieben, sondern auch zusätzlich drehen, ist eine Ausführungsform zweckmäßig, die in einer Pupille des Strahlenganges zwischen Hauptfarbteiler 17 und Probe 23 ein Abbe-König-Prisma vorsieht, das bekanntermaßen eine Bildfelddrehung zur Folge hat. Auch diese wird in Richtung auf den Detektor hin wieder aufgehoben. Nun kann man Bilder mit verschiedenen Offsetverschiebungen OF und verschiedenen Drehwinkeln messen und anschließend zu einem hochauflösenden Bild verrechnen, beispielsweise gemäß einem Algorithmus, wie er in der Veröffentlichung, Gustafsson, M., "Doubling the lateral resolution of wide-field fluorescence microscopy using structured illumination", in "Three-dimensional and multidimensional microscopy: Image acquisition processing VII", Proceedings of SPIE, Vol. 3919 (2000), p 141-150, beschrieben ist.

Figur 3 zeigt eine weitere mögliche Bauweise für ein Laserscanningmikroskop 1, bei dem ein Nipkowscheiben-Ansatz zur Verwirklichung kommt. Das Lichtquellenmodul 2, das in Figur 3 stark vereinfacht dargestellt ist, beleuchtet über ein Minilinsenarray 65 durch den Hauptfarbteiler 17 hindurch eine Nipkow-Scheibe 64, wie sie beispielsweise in US 6.028.306, WO 88 07695 oder DE 2360197 A1 beschrieben ist. Die über das Minilinsenarray 65 beleuchteten Pinholes der Nipkow-Scheibe werden in die im Mikroskopmodul 4 befindliche Probe abgebildet. Um auch hier die probenseitige Bildgröße variieren zu können, ist wiederum die Zoom-Optik 41 vorgesehen.

In Abwandlung zur Bauweise der Figur 1 ist beim Nipkow-Scanner die Beleuchtung im Durchgang durch den Hauptfarbteiler 17 vorgenommen und die zu detektierende Strahlung wird ausgespiegelt. Darüber hinaus ist in Abwandlung zu Figur 2 der Detektor 28 nun ortsauflösend ausgeführt, damit die mit der Nipkow-Scheibe 64 erreichte Multipunktbeleuchtung auch entsprechend parallel abgetastet wird. Ferner ist zwischen der Nipkow-Scheibe 64 und der Zoom-Optik 41 eine geeignete feststehende Optik 63 mit positiver Brechkraft angeordnet, welche die durch die Pinholes der Nipkow-Scheibe 64 divergent austretende Strahlung in geeignete Bündeldurchmesser umwandelt. Der Hauptfarbteiler 17 ist für den Nipkow-Aufbau der Figur 3 ein klassischer dichroitischer Strahlteiler, d. h. nicht der zuvor erwähnte Strahlteiler mit schlitzförmig oder punktförmig reflektierendem Bereich.

Die Zoom-Optik 41 entspricht der zuvor erläuterten Bauweise, wobei natürlich der Scanner 18 durch die Nipkow-Scheibe 64 überflüssig wird. Er kann dennoch vorgesehen werden, wenn man die anhand Figur 2 erläuterte Auswahl eines Bereiches ROI vornehmen möchten. Gleiches gilt für das Abbe-König-Prisma.

Einen alternativen Ansatz mit Multipunktabtastung zeigt in schematischer Darstellung Figur 4, bei der mehrere Lichtquellen schräg in die Scannerpupille einstrahlen. Auch hier läßt sich durch Nutzung der Zoom-Optik 41 zur Abbildung zwischen Hauptfarbteiler 17 und Scanner 18 eine Zoomfunktion wie in Figur 2 dargestellt realisieren. Durch gleichzeitiges Einstrahlen von Lichtbündeln unter verschiedenen Winkeln in einer zur Pupille konjugierten Ebene, werden Lichtpunkte in einer zur Objektebene konjugierten Ebene erzeugt, die vom Scanner 18 gleichzeitig über einen Teilbereich des gesamten Objektfeldes geführt werden. Die Bildinformation entsteht durch Auswertung sämtlicher Teilbilder auf einem ortsauflösenden Matrixdetektor 28.

Als weitere Ausführungsform kommt eine Multipunkt-Abtastung, wie in US 6.028.306 beschrieben, in Frage, deren Offenbarung vollumfänglich diesbezüglich hier einbezogen wird. Auch hier ist ein ortsauflösender Detektor 28 vorzusehen. Die Probe wird dann durch eine Multipunktlichtquelle beleuchtet, die durch einen Strahlexpander mit nachgeordneten Mikrolinsenarray realisiert wird, das eine Multiaperturenplatte so beleuchtet, daß dadurch eine Multipunktlichtquelle realisiert ist.

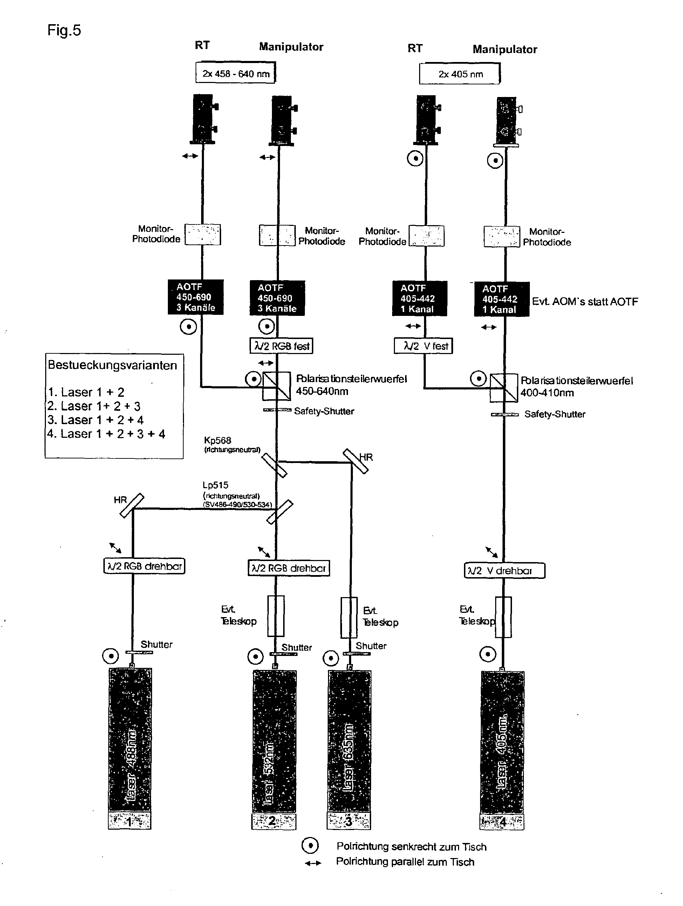

In den weiteren Zeichnungen sind folgende Elemente und Bezeichnungen dargestellt und verwendet (verwiesen wird zur Erläuterung auch auf EP977069A1)
Laser 1-4 bzw. A-G als Lichtquellen
Umlenkspiegel US zur Umlenkung des Laserstrahls
Lichtklappe oder Shutter V als Lichtverschluss
λ /2 Platte drehbar
Polteiler PT zur Polteilung
Lichtleitfasern LF zur Lichtübermittlung
Faser- Koppelport zur Faserankopplung_
Abschwächer A (bevorzugt AOTF oder AOM)
Monitordiode MD zur Strahlungsdetektion
Detektoren PMT1-3 zur wellenlängenselektiven Strahlungsdetektion
Detektor T - PMT zur Detektion der transmittierten Strahlung
Pinholes PH1-4
Farbteiler DBS 1-3
Pinholeoptiken zur Fokussierung auf das Pinhole
Hauptfarbteiler MDB
Emissionsfilter EF1-3
Kollimatoren zur wellenlängenabhängigen Einstellung
Scanner
Scanoptik oder Scanlinse
Okular
Tubuslinsen
Strahlvereiniger
Non-descannt Detektor zwischen Objektiv und Scanner
Objektiv
Probe
Kondensor
HBO Weißlichtquelle
Halogenlampe HAL zur Durchlichtbeleuchtung
Teleskopoptik
Zoomoptik
Strahlformer zur Erzeugung einer Beleuchtungslinie
Zylinderteleskop
Zylinderoptik
Spalt
Detektor zur Linienerfassung mit Spaltblenden
Schneller Schaltspiegel SS
In Fig.5 sind vier Laser 1-4 dargestellt mit unterschiedlichen Wellenlängen, denen in Lichtrichtung Shutter und drehbare λ/2 Platten zur Einstellung einer definierten Polarisationsebene aus dem im linear polarisierten Laserstrahl nachgeordnet sind. Die Laser 1-3 werden über Umlenkspiegel und dichroitische Teiler zusammengeführt und gelangen wie der Laser 4 auf den Polarisationsstrahlteilerwürfel Die dichroitischen Teiler sind dabei in besonderer Weise so auszuführen, das ihre Transmissions bzw. Reflexionseigenschaften unabhaengig von der Drehung der Polarisationsebene sind.
Entsprechend der jeweiligen Einstellung ihrer Polarisationsebene werden sie vollständig oder nur teilweise transmittiert oder reflektiert (Laser 4 hier wird nicht mit anderen Lasern vereinigt, sondern direkt auf den Polteiler geführt) und gelangen über selektive Strahlabschwächer ( AOTF) in Richtung von Lichtleitfasern. Eine die feste lambda/2 Platte stellt im transmittierten (VIS) bzw. reflektierten (V) die richtige Polarisationsebene für den AOTF ein
Es sind Koppelports für Lichtleitfasern in verschiedene Mikroskopsysteme vorgesehen , die weiter hinten im Detail beschrieben werden. Der Polarisationsstrahlteilerwuerfel kennt nur zwei Zustaende. Das transmittierte Licht ist immer parallel zur Montageplatte polarisiert, das reflektierte immer sinkrecht zur Montageplatte. Steht die lambda/2 Platte vor einem Laser mit der optischen Achse unter 22.5° zur Laserpolarisation (linear polarisiert und senkrecht zur Montageplatte) wird die Polarisationsebene um 45° gedreht. Das bedeutet, dass der Polarisationstrahlteiler als 50/50 Teiler wirkt. Andere Winkel ergeben andere Teilungsverhaeltnisse. z.B. lambda / 2 Platte unter 45° heisst Drehung der Polarisationsebene um 90° und theoretisch 100% Reflexion am Polariosationsteilerwuerfel. Das heisst weiter: Der AOTF im reflektierten Pfad (am Polteiler) sieht immer senkrecht polarisiertes Licht, so dass der AOTF korrekt genutzt wird. Fuer den transmittierten Pfad ist eine feste Drehung der Polarisationsebene um 90° notwendig um die Bedingung 'Eingangspolarisation AOTF senkrecht zur Montageplatte' zu erfuellen. Die Entkopplung der lambda/2 Platten erfolgt durch den Polarisationsteilerwuerfel.
Hier ist beispielhaft ein Scanningmikroskop RT und ein scannender Manipulator angegeben, auf die unterschiedlichen Wellenlängen unterschiedlich aufgeteilt werden können.
Dies geschieht stufenlos durch entsprechende, elektronisch koordinierte Drehung der einzelnen λ/2 Platten .
Hierdurch ist ein sehr variabler Betrieb auch von mehreren unabhängigen Beobachtungs- und/ oder Manipulationssystemen möglich.

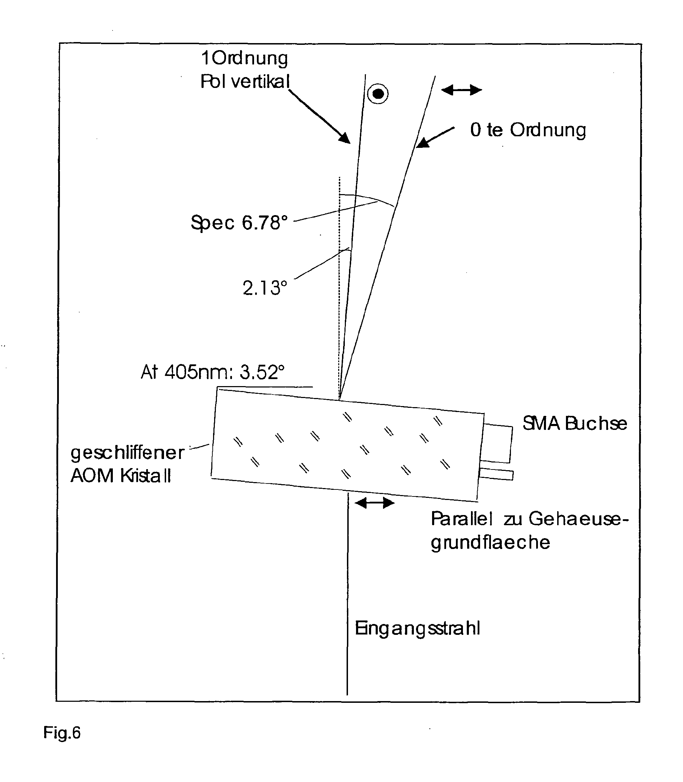

In Fig.6 ist ein AOM Kristall schematisch dargestellt, der einen Eingangsstrahl, beispielsweise einen Laserstrahl mit 405 nm Wellenlänge, in zwei linear aber senkrecht zueinander polarisierte Strahlen 0ter und erster Ordnung aufteilt, die in unterschiedliche Strahlengänge eingekoppelt werden können .Durch entsprechende Ansteuerung des AOM wird das Verhältnis der Anteile verändert.

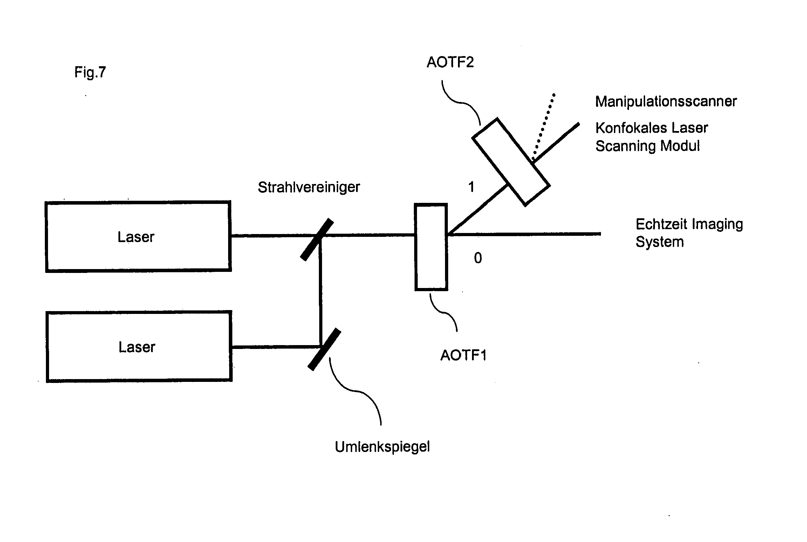

In Fig. 7 sind zwei Laser dargestellt, die über Umlenkspiegel und Strahlvereiniger vereinigt werden und denen ein AOTF1 zur einstellbaren Aufteilung der Strahlung in die 0te und erste Ordnung nachgeordnet ist.

Die erste Beugungsordnung des AOTF, der eigentliche Arbeitsstrahl ist kollinear fuer den gesamten definierten Spektralbereich (also z.B. 450-700nm). Die nullte Ordnung wird durch die prismatische Wirkung des Kristalles aufgespalten. Die Anordnung ist somit nur fuer eine bestimmte Wellenlaenge nutzbar (muss festgelegt werden). Es sind natuerlich Anordnungen denkbar, die die spektrale Aufspaltung der ersten Ordnung kompensieren (zweites Prisma mit umgekehrter Dispersion, entsprechend modifizierter AOTF Kristall).
Die Intensität in den Zweigen unterschiedlicher Ordnung ist wellenlängenabhängig einstellbar, eine angelegte Steuerspannung regelt die in die erste Ordnung gebeugte Intensitaet, der Rest verbleibt in der 0ten Ordnung)

Die Strahlen 0ter und erster Ordnung können in unterschiedliche Beobachtungs/ und oder Manipulationssysteme gelangen .
In einem Zweig, hier dem 1.ter Ordnung kann ein weiterer AOTF2 vorgesehen sein, der eine weitere Aufteilung vornehmen kann.

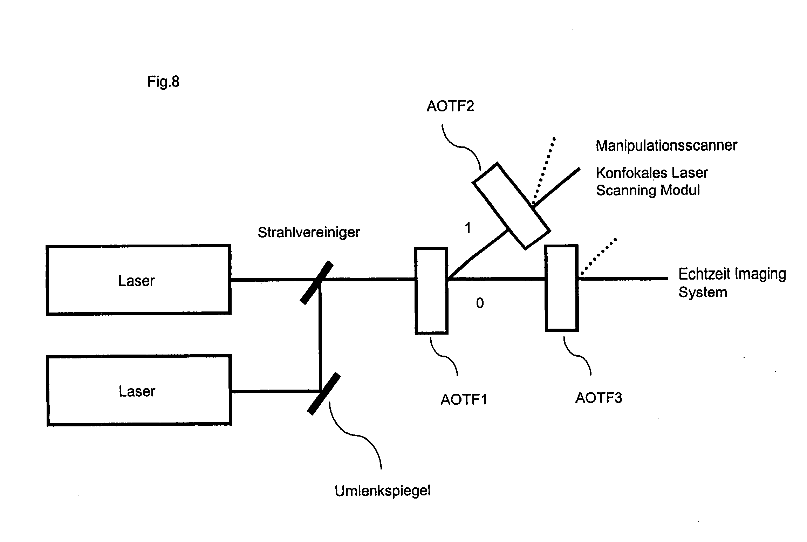

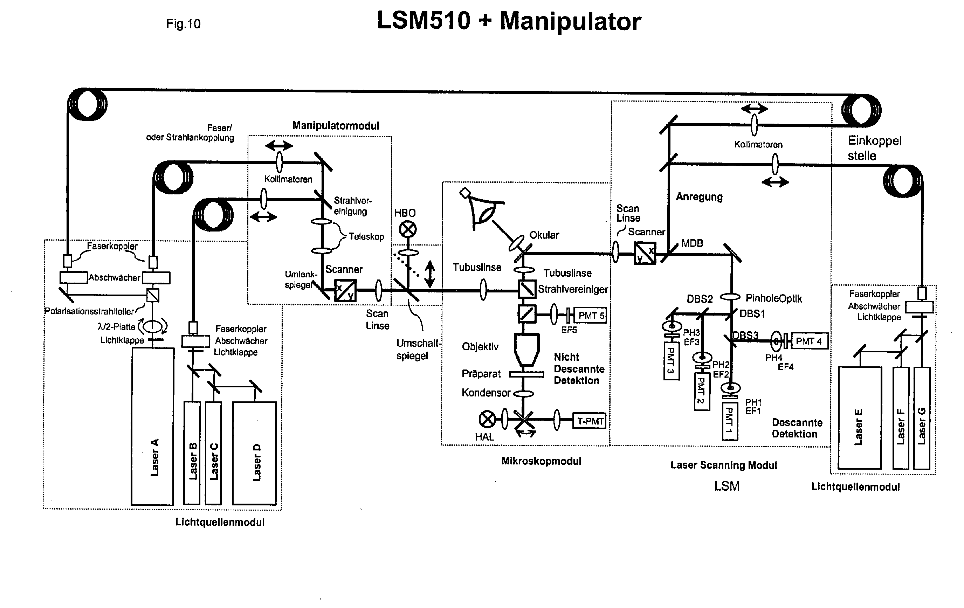

In Fig.8 ist in dem anderen Zweig (0ter Ordnung) ebenfalls ein AOTF3 vorgesehen . Wenn beispielsweise AOTF1 in diesen Zweig eine Wellenlänge mit voller Intensität einleitet, kann mittels AOTF 3 wiederum eine Aufteilung vorgenommen werden.

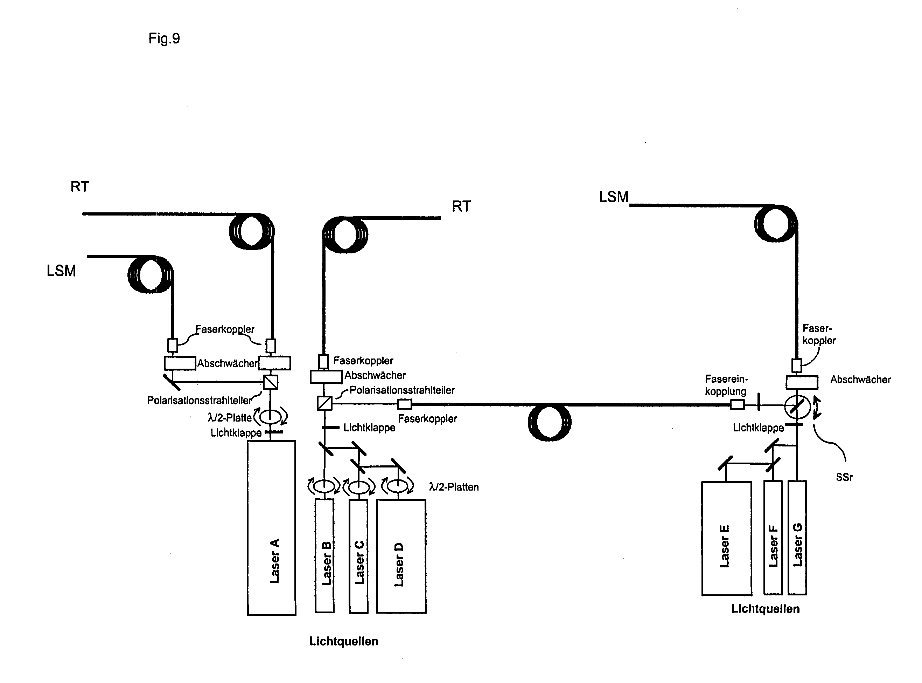

In Fig.9 ist ein Beleuchtungsteil mit Laser A vorgesehen, dessen Licht mittels einer λ/2 Platte bezüglich der Orientierung seiner Polarisationsebene einstellbar ist und dementsprechend am Polarisationsteilerwuerfel reflektiert oder transmittiert wird und über dargestellte Lichtleitfasern in einstellbar in unterschiedliche Systeme, beispielsweise ein LSM510 und einen Linienscanner RT gelangt.
Das Licht der Laser B-D wird wie in Fig.1 zusammengeführt und jeweils vorher über λ/2 Platten bezüglich der Orientierung seiner Polarisationsebene eingestellt.
Am Polteiler wird es reflektiert bzw. transmittiert und gelangt so jeweils über Lichtleitfasern entweder zu einem Linienscanner RT oder zu einem weiteren Beleuchtungsmodul mit Lasern E-G.
Die Einkopplung in den Beleuchtungsstrahlengang der Laser E-G erfolgt beispielsweise über einen schnellen Schaltspiegel SS, der abwechselnd den Strahlengang freigibt oder einkoppelnd wirt.
Bei dem Schaltspiegel kann es sich auch um ein Rad handeln , das abwechselnd reflektierende und transmittierende Abschnitte aufweist .
Ein fester Strahlteiler zur Zusammenführung ist ebenfalls denkbar.
Durch diese Koppelstelle kann also Licht der Laser B-D mit dem Licht der Laser E-G einstellbar gemischt werden und gelangt über eine Lichtleitfaser beispielsweise zu einem LSM 510
In Fig. 10 ist ein Laser Scanning Mikroskop mit Lichtquellen E-G, einem Scanmodul (LSM) und einem Mikroskopmodul vorgesehen, wie es beispielsweise in DE beschrieben wird.
Über einen Strahlvereiniger wird ein Manipulationssystem , bestehend aus einem Lichtquellenmodul und einem Manipulatormodul, eingekoppelt.
Über den Scanner des Manipulators können z.B. gezielt bestimmte Probenbereiche gebleicht werden oder physiologische Reaktionen ausgelöst werden, wobei gleichzeitig oder alternierend mittels des LSM 510 eine Bildai8ufnahme erfolgen kann.
Im Lichtquellenmodul des Manipulators ist, beispielsweise dem Laser A nachfolgend, eine λ/2 Plattevorgesehen, die mit einem Polarisationsstrahlteilerwürfel zusammenwirkt der das Licht des Lasers A wie oben beschrieben einstellbar auf den Manipulationsstrahlengang und den LSM510 Strahlengang , jeweils über Lichtleitfasern aufteilt.
Am LSM ist zu diesem Zweck eine separate Einkoppelstelle vorgesehen, wobei unterschiedliche Einkopplungen wiederum über ( interne) Spiegel und Strahlteiler zusammengeführt werden.
Aus diese Weise kann der Laser A von beiden Systemen genutzt werden.

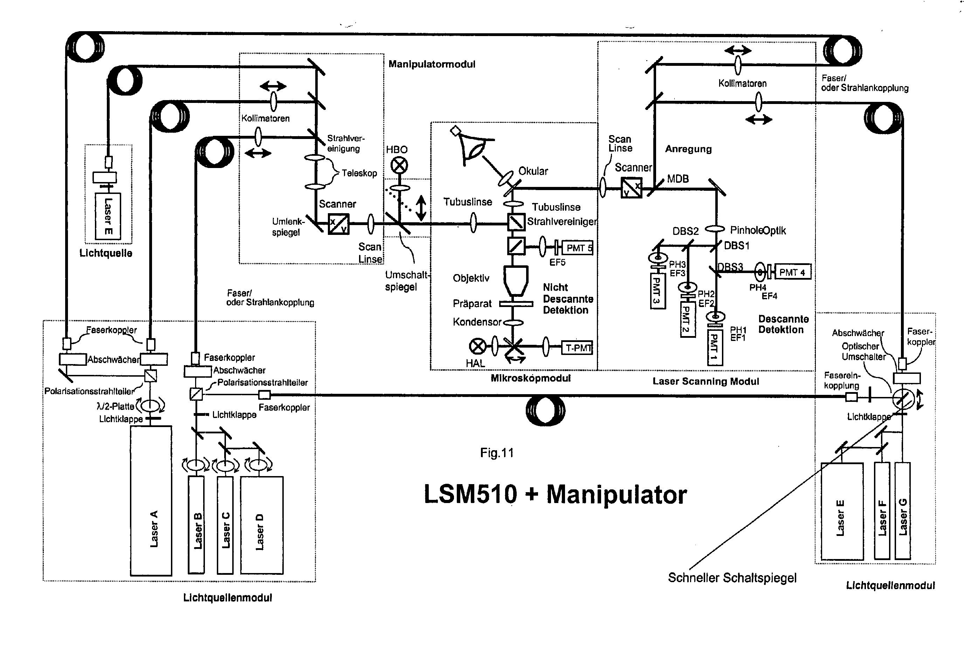

In Fig.11 sind weiterhin auch die Verhältnisse der Laser B-D am Manipulator über λ/2 Platten und Polarisationsstrahlteilerwürfel einstellbar und eine weitere Verbindung besteht am Polteiler in Richtung des LSM über eine Lichtleitfaser, wobei am LSM beispielsweise über einen schnellschaltbaren Spiegel (Klappspiegel) eingekoppelt werden kann.
Auf diese Weise gelangt Licht der Laser B-G neben dem Licht des Lasers A auch einstellbar in beide Strahlengänge.

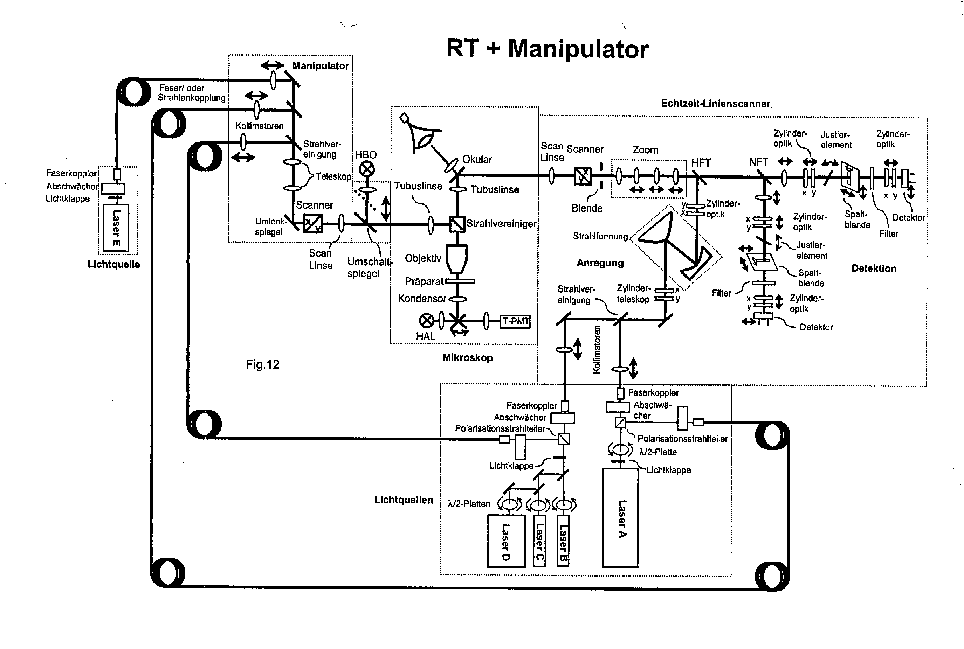

In Fig.12 ist neben dem Manipulator ein Linienscanner RT vorgesehen, bei dem das Licht über Strahlformer linienförmig in den Mikroskopstrahlengang gelangt.

Hier ist ein gemeinsamer Lichtquellenmodul vorgesehen, wobei wiederum überλ/2 Platten und Polteiler eine Aufteilung in die Systeme einstellbar vorgenommen werden kann.
So steht das Licht der Laser A-D beiden Systemen zur Verfügung.
Das bedeutet eine wesentliche Vereinfachung und Kostenersparnis.
Eine weitere Lichtquelle E kann optional beispielsweise nur für den Manipulator vorgesehen sein, weil ihre Wellenlänge im RT Scanner nicht benötigt wird.

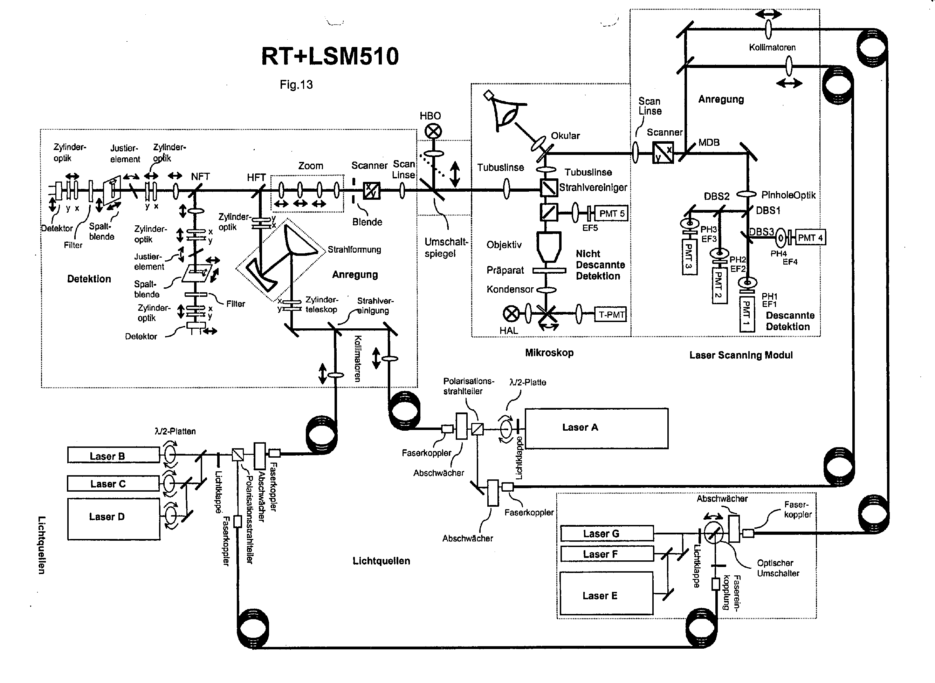

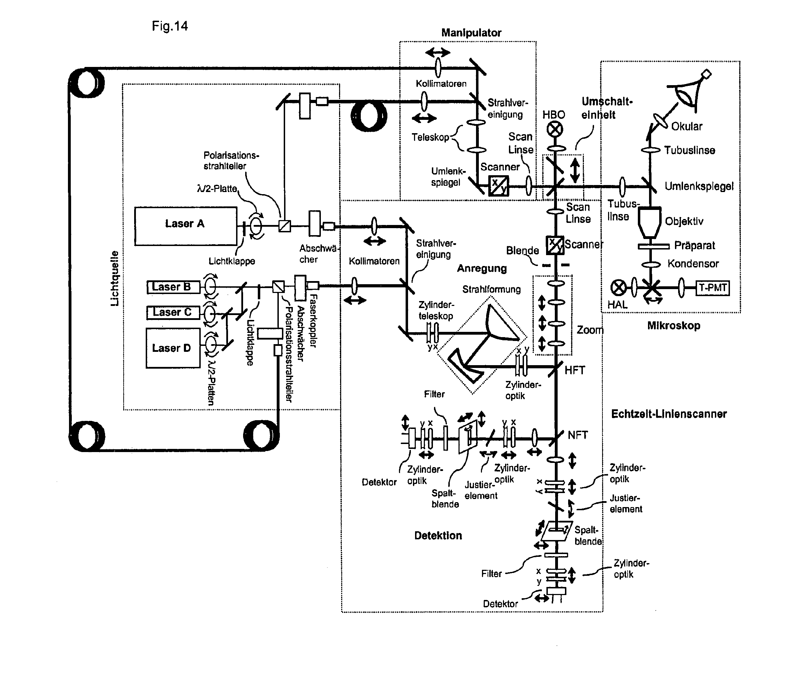

In Fig.13 ist ein RT Scanner und ein punktscannendes LSM vorgesehen, die über einen gemeinsamen Strahlvereiniger beide Bilder von der Probe in gleichen oder unteerschiedlichen Probenbereichen ausführen können.
Verschiedene Lasermodule B-D, A, G-E sind vorgesehen, die jeweils wie oben beschrieben wahlweise einstellbar für beide Systeme zur Verfügung stehen
In Fig.14 werden über eine Umschalteinheit ( Einschiebbare Spiegel) durch Umschaltung zwischen einem von unten und einem seitlich eingekoppelten Strahlengang wahlweise oder alternierend ein RT Scanner und ein Manipulator in das Mikroskopteil eingekoppelt.
Ein gemeinsames Lichtquellenmodul ist für beide Systeme wie oben beschrieben wirksam.

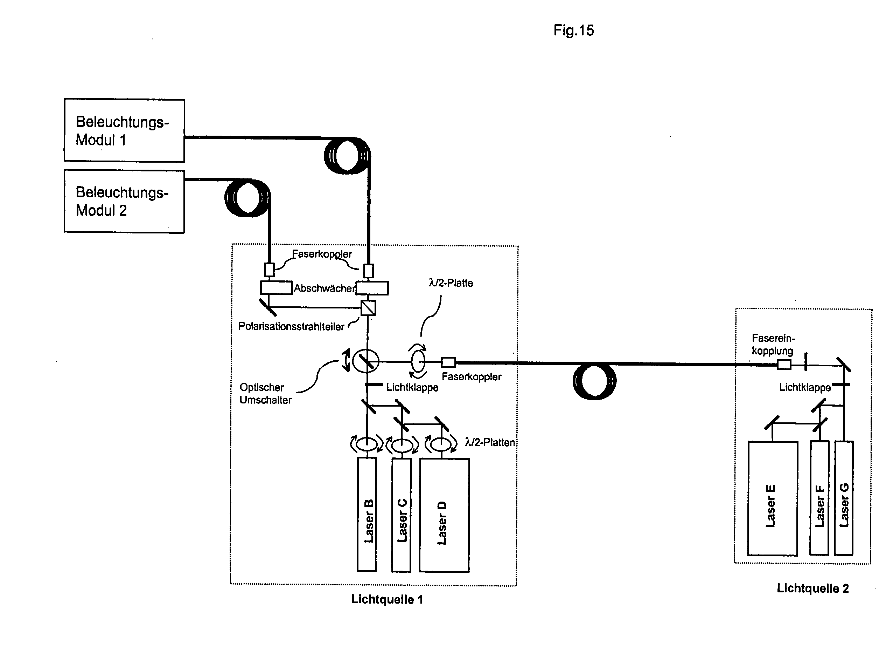

In Fig.15 ist dargestellt, daß eine einstellbare Einkopplung von Lichtquellen 1 und 2, jeweils vorteilhaft bestehend aus mehreren Lasern, in einen gemeinsamen Strahlengang, beispielsweise über einen schnellen Schaltspiegel SS erfolgt.
Die Laser sind durch nachgeordnete λ/2 Platten zumindest teilweise in ihrer Polarisation beeinflußbar. Das Licht aus der Lichtquelle 2 kann auch erst nach Passieren der Lichtleitfaser eineλ/2 Platte₋passieren, um den Lichtanteil der Lichtquelle2 vor der Einkopplung in den gemeinsamen Strahlengang zu beeinflussen.
Ein Polteiler im gemeinsamen Strahlengang dient zur Aufteilung wiederum in unterschiedliche Beleuchtungsmodule 1 und 2, für unterschiedliche Scaneinrichtungen zur Bildaufnahme und/ oder Manipulation , wobei Lichtanteile und Intensitäten , die in die einzelnen Beleuchtungsmodule gelangen, vorteilhaft steuerbar sind. Die Steuerung erfolgt sowohl über λ/2 Platten als auch mittels der Abschwächer ( AOTF) in den wieder getrennten Strahlengängen.

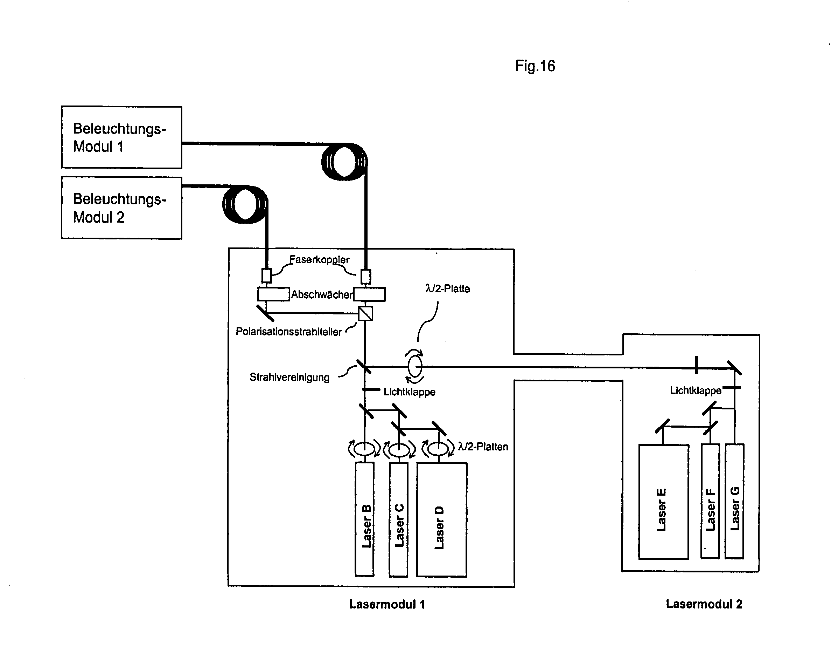

In Abb. 16 ist eine Ausführung wie in Fig.15 dargestellt bei der das Licht eines Lasermoduls 2 jedoch ohne Lichtleitfasern, beispielsweise in einem Gehäusekanal , auf eine Strahlvereinigung geführt ist.

Die beschriebene Erfindung stellt eine bedeutende Ausweitung der Anwendungsmöglichkeiten von schnellen konfokalen Laserscanmikroskopen dar. Die Bedeutung einer solchen Weiterentwicklung lässt sich anhand der zellbiologischen Standardliteratur und den dort beschriebenen schnellen zellulären und subzellulären Vorgängen¹ und den eingesetzten Untersuchungsmethoden mit einer Vielzahl von Farbstoffen² ablesen.
Siehe z.B.:
¹B. Alberts et al. (2002): Molecular Biology of the Cell; Garland Science.
^{1,2}G. Karp (2002): Cell and Molecular Biology: Concepts and Experiments; Wiley Text Books.
^{1,2}R. Yuste et al. (2000): Imaging neurons - a laboratory Manual; Cold Spring Harbor Laboratory Press, New York.
²R.P. Haugland (2003): Handbook of fluorescent Probes and research Products, 10th Edition; Molecular Probes Inc. and Molecular Probes Europe BV.

De Erfindung hat insbesondere große Bedeutung für die folgenden Prozesse und Vorgange:

### Entwicklung von Organismen

Die beschriebene Erfindung ist u.a. für die Untersuchung von Entwicklungsprozessen geeignet, die sich vor allem durch dynamische Prozesse im Zehntelsekunden bis hin zum Stundenbereich auszeichnen. Beispielanwendungen auf der Ebene von Zellverbänden und ganzen Organismen sind z.B. hier beschrieben:
■ Abdul-Karim, M.A. et al. beschreiben 2003 in Microvasc. Res., 66:113-125 eine Langzeitanalyse von Blutgefässveränderungen im lebenden Tier, wobei Fluoreszenzbilder in Intervallen über mehrere Tage aufgenommen wurde. Die 3D-Datensätze wurden mit adaptiven Algorithmen ausgewertet, um die Bewegungstrajektorien schematisch darzustellen.
■ Soll, D.R. et al. beschreiben 2003 in Scientific World Journ. 3:827-841 eine softwarebasierte Bewegungsanalyse von mikroskopischen Daten von Kemen und Pseudopodien lebender Zellen in allen 3 Raumdimensionen.
■ Grossmann, R. et al. beschreiben 2002 in Glia, 37:229-240 eine 3D-Analyse der Bewegungen von Mikrogliazellen der Ratte, wobei die Daten über bis zu 10 Stunden aufgenommen wurden. Gleichzeitig kommen nach traumatischer Schädigung auch schnelle Reaktionen der Glia vor, so dass eine hohe Datenrate und entsprechendes Datenvolumen entsteht.

Das betrifft insbesondere folgende Schwerpunkte:
- Analyse lebender Zellen in einer 3D Umgebung, deren Nachbarzellen empfindlich auf Laserbeleuchtung reagieren und die von der Beleuchtung der 3D-ROI geschützt werden müssen;
- Analyse lebender Zellen in einer 3D Umgebung mit Markierungen, die gezielt durch Laserbeleuchtung in 3D gebleicht werden sollen, z.B. FRET-Experimente;
- Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
- Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
- Gezielte Analyse lebender Zellen in einer 3D Umgebung mit Markierungen, die manipulationsbedingte Farbänderungen durch Laserbeleuchtung aufweisen, z.B. paGFP, Kaede;
- Gezielte Analyse lebender Zellen in einer 3D Umgebung mit sehr schwachen Markierungen, die z.B. eine optimale Balance von Konfokalität gegen Detektionsempfindlichkeit erfordern.
- Lebende Zellen in einem 3D-Gewebeverband mit variierenden Mehrfachmarkierungen, z.B. CFP, GFP, YFP, DsRed, HcRed u.ä.
- Lebende Zellen in einem 3D-Gewebeverband mit Markierungen, die funktionsabhängige Farbänderungen aufweisen, z.B. Ca+-Marker
- Lebende Zellen in einem 3D-Gewebeverband mit Markierungen, die entwicklungsbedingte Farbänderungen aufweisen, z.B. transgene Tiere mit GFP
- Lebende Zellen in einem 3D-Gewebeverband mit Markierungen, die manipulationsbedingte Farbänderungen durch Laserbeleuchtung aufweisen, z.B. paGFP, Kaede
- Lebende Zellen in einem 3D-Gewebeverband mit sehr schwachen Markierungen, die eine Einschränkung der Konfokalität zugunsten der Detektionsempfindlichkeit erfordern.
- Letztgenannter Punkt in Kombination mit den Vorangehenden. *Transportvorgänge in Zellen*

Die beschriebene Erfindung ist für die Untersuchung von innerzellulären Transportvorgängen exzellent geeignet, da hierbei recht kleine motile Strukturen, z.B. Proteine, mit hoher Geschwindigkeit (meist im Bereich von Hundertstelsekunden) dargestellt werden müssen. Um die Dynamik von komplexen Transportvorgängen zu erfassen, kommen oft auch Anwendungen wie FRAP mit ROI-Bleichen zum Einsatz. Beispiele für solche Studien sind z.B. hier beschrieben:
■ Umenishi, F. et al. beschreiben 2000 in Biophys J., 78:1024-1035 eine Analyse der räumlichen Beweglichkeit von Aquaporin in GFP-transfizierten Kulturzellen. Hierzu wurden in den Zellmembranen Punkte gezielt lokal gebleicht und die Diffusion der Fluoreszenz in der Umgebung analysiert.
■ Gimpl, G. et al. beschreiben 2002 in Prog. Brain Res., 139:43-55 Experimente mit ROI-Bleichen und Fluoreszenzimaging zur Analyse der Mobilität und Verteilung von GFP-markierten Oxytocin-Rezeptoren in Fibroblasten. Dabei stellen sich hohe Anforderungen an die räumliche Positionierung und Auflösung sowie die direkte zeitliche Folge von Bleichen und Imaging.
■ Zhang et al. beschreiben 2001 in Neuron, 31:261-275 live cell Imaging von GFP-transfizierten Nervenzellen, wobei die Bewegung von Granuli durch kombiniertes Bleichen und Fluoreszenzimaging analysiert wurde. Die Dynamik der Nervenzellen stellt dabei hohe Anforderungen an die Geschwindigkeit des Imaging.

### Wechselwirkungen von Molekülen

Die beschriebene Erfindung ist insbesondere für die Darstellung molekularer und anderer subzellulärer Wechselwirkungen geeignet. Hierbei müssen sehr kleine Strukturen mit hoher Geschwindigkeit (im Bereich um die Hundertstelsekunde) dargestellt werden. Um die für die Wechselwirkung notwendige räumliche Position der Moleküle aufzulösen, sind auch indirekte Techniken wie z.B. FRET mit ROI-Bleichen einzusetzen. Beispielanwendungen sind z.B. hier beschrieben:
■ Petersen, M.A. und Dailey, M.E. beschreiben 2004 in Glia, 46:195-206 eine Zweikanalaufnahme lebender Hippokampuskulturen der Ratte, wobei die zwei Kanäle für die Marker Lectin und Sytox räumlich in 3D und über einen längeren Zeitraum aufgezeichnet werden.
■ Yamamoto, N. et al. beschreiben 2003 in Clin. Exp. Metastasis, 20:633-638 ein Zweifarbimaging von humanen fibrosarcoma Zellen, wobei grünes und rotes fluoreszentes Protein (GFP und RFP) simultan in Echtzeit beobachtet wurde.
■ Bertera, S. et al. beschreiben 2003 in Biotechniques, 35:718-722 ein Multicolorimaging von transgenen Mäusen markiert mit Timer reporter Protein, welches seine Farbe nach Synthese von grün in rot ändert. Die Bildaufnahme erfolgt als schnelle Serie 3-dimensional im Gewebe am lebenden Tier.

### Signalübertragung zwischen Zellen

Die beschriebene Erfindung ist für die Untersuchung von meist extrem schnellen Signalübertragungsvorgängen hervorragend sehr gut geeignet. Diese meist neurophysiologischen Vorgänge stellen höchste Anforderungen an die zeitliche Auflösung, da die durch Ionen vermittelten Aktivitäten sich im Bereich von Hundertstel- bis kleiner als Tausendstelsekunden abspielen. Beispielanwendungen von Untersuchungen im Muskel- oder Nervensystem sind z.B. hier beschrieben:
■ Brum G et al. beschreiben 2000 in J Physiol. 528: 419-433 die Lokalisation von schnellen Ca+ Aktivitäten in Muskelzellen des Frosches nach Reizung mit Caffeine als Transmitter. Die Lokalisation und Mikrometer-genaue Auflösung gelang nur durch Einsatz eines schnellen, konfokalen Mikroskopes.
■ Schmidt H et al. beschreiben 2003 in J Physiol. 551:13-32 eine Analyse von Ca+ Ionen in Nervenzellfortsätzen von transgenen Mäusen. Die Untersuchung von schnellen Ca+-Transienten in Mäusen mit veränderten Ca+ bindenden Proteinen konnte nur mit hochauflösender konfokaler Mikroskopie durchgeführt werden, da auch die Lokalisation der Ca+ Aktivität innerhalb der Nervenzelle und deren genaue zeitliche Kinetik eine wichtige Rolle spielt.

## Patentansprüche

1. Lichtrastermikroskop mit mindestens einem Beleuchtungsmodul, wobei Mittel zur variablen Aufteilung des Laserlichts auf mindestens zwei Beleuchtungskanäle vorgesehen sind und eine gemeinsame Beleuchtung einer Probe auf gleichen oder unterschiedlichen Probenbereichen erfolgt

2. Lichtrastermikroskop nach Anspruch 1, wobei die gemeinsame Beleuchtung simultan oder alternierend erfolgt

3. Lichtrastermikroskop nach Anspruch 1 oder 2,
wobei im Beleuchtungsmodul mindestens ein Laser vorgesehen ist

4. Lichtrastermikroskop nach Anspruch 1,2 oder 3, wobei Intensität und/ oder Wellenlänge und / oder Polarisation der aufgeteilten Beleuchtung variiert wird

5. Lichtrastermikroskop nach einem der Ansprüche 1-4,
wobei -mehrere Laser unterschiedlicher Wellenlänge vorgesehen sind

6. Lichtrastermikroskop nach einem der vorangehenden Ansprüche, wobei mehrere Laser in einem gemeinsamen Strahlengang vereinigt, sind, in dem die Mittel zur Aufteilung angeordnet sind

7. Lichtrastermikroskop nach einem der vorangehenden Ansprüche, wobei ein Laser, vorzugsweise einstellbar , in mindestens zwei Kanäle aufgeteilt wird

8. Lichtrastermikroskop nach einem der vorangehenden Ansprüche, wobei vor der Aufteilung eine Vereinigung mit mindestens einem weiteren Laser erfolgt

9. Lichtrastermikroskop nach einem der vorangehenden Ansprüche, wobei Intensität und / oder Wellenlänge einstellbar ist.

10. Lichtrastermikroskop nach einem der vorangehenden Ansprüche, wobei einer der aufgeteilten Beleuchtungskanäle optisch mit einem weiteren Lichtrastermikroskop und / oder einer optischen Manipulationseinheit verbunden ist.

11. Lichtrastermikroskop nach einem der vorangehenden Ansprüche, wobei ein Linienscanner als zweites Lichtrastermikroskop vorgesehen ist

12. Kombination aus einem ersten und mindestens einem zweiten Lichtrastermikroskop und/ oder einer optischen Manipulationseinheit, die eine Probe simultan und / oder alternierend beleuchten, wobei das Beleuchtungslicht aus dem ersten und/ oder dem zweiten Lichtrastermikroskop und/ oder der Manipulationseinheit optisch aufgeteilt wird und zur Beleuchtung des jeweils anderen Lichtrastermikroskop und/oder der Manipulationseinheit dient.

13. Kombination nach Anspruch 12, , wobei eine optische Verbindung über Lichtleitfasern zum jeweils anderen System erfolgt.

14. Kombination nach einem der Ansprüche 11-13, wobei mindestens ein gemeinsames Beleuchtungsmodul für mehrere unabhängig die Probe rasterartig beleuchtende Systeme vorgesehen ist

15. Lichtrastermikroskop nach einem der vorangehenden Ansprüche, wobei Mittel zur Aufteilung akustooptisch sind

16. Lichtrastermikroskop nach einem der vorangehenden Ansprüche, wobei Mittel zur Aufteilung diffraktiv sind

17. Lichtrastermikroskop nach einem der vorangehenden Ansprüche, wobei Mittel zur Aufteilung polarisationsoptisch sind

18. Lichtrastermikroskop nach einem der vorangehenden Ansprüche, wobei Mittel zur Aufteilung Teilerspiegel sind

19. Lichtrastermikroskop nach einem der vorangehenden Ansprüche, wobei Mittel zur Aufteilung schwenkbare Spiegel sind

20. Lichtrastermikroskop nach einem der vorangehenden Ansprüche, wobei die Aufteilung einstellbar bezüglich Intensität und/ oder Wellenlänge ist

21. Lichtrastermikroskop nach einem der vorangehenden Ansprüche, wobei Die Mittel zur Aufteilung schnelle Schaltmittel sind

22. Verwendung von Anordnungen und/ oder Verfahren nach mindestens einem der vorangehenden Ansprüche
zur Untersuchung von Entwicklungsprozessen , insbesondere dynamischer Prozesse im Zehntelsekunden bis hin zum Stundenbereich, insbesondere auf der Ebene von Zellverbänden und ganzen Organismen, insbesondere nach mindestens einem der folgenden Punkte:
• Analyse lebender Zellen in einer 3D Umgebung, deren Nachbarzellen empfindlich auf Laserbeleuchtung reagieren und die von der Beleuchtung der 3D-ROI geschützt werden müssen;
• Analyse lebender Zellen in einer 3D Umgebung mit Markierungen, die gezielt durch Laserbeleuchtung in 3D gebleicht werden sollen, z.B. FRET-Experimente;
• Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
• Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
• Gezielte Analyse lebender Zellen in einer 3D Umgebung mit Markierungen, die manipulationsbedingte Farbänderungen durch Laserbeleuchtung aufweisen, z.B. paGFP, Kaede;
• Gezielte Analyse lebender Zellen in einer 3D Umgebung mit sehr schwachen Markierungen, die z.B. eine optimale Balance von Konfokalität gegen Detektionsempfindlichkeit erfordern.
• Lebende Zellen in einem 3D-Gewebeverband mit variierenden Mehrfachmarkierungen, z.B. CFP, GFP, YFP, DsRed, HcRed u.ä.
• Lebende Zellen in einem 3D-Gewebeverband mit Markierungen, die funktionsabhängige Farbänderungen aufweisen, z.B. Ca+-Marker
• Lebende Zellen in einem 3D-Gewebeverband mit Markierungen, die entwicklungsbedingte Farbänderungen aufweisen, z.B. transgene Tiere mit GFP
• Lebende Zellen in einem 3D-Gewebeverband mit Markierungen, die manipulationsbedingte Farbänderungen durch Laserbeleuchtung aufweisen, z.B. paGFP, Kaede
• Lebende Zellen in einem 3D-Gewebeverband mit sehr schwachen Markierungen, die eine Einschränkung der Konfokalität zugunsten der Detektionsempfindlichkeit erfordern.
• Letztgenannter Punkt in Kombination mit den Vorangehenden.

23. Verwendung von Anordnungen und/ oder Verfahren nach mindestens einem der vorangehenden Ansprüche für die Untersuchung von innerzellulären Transportvorgängen , insbesondere zur Darstellung kleine motile Strukturen, z.B. Proteine, mit hoher Geschwindigkeit (meist im Bereich von Hundertstelsekunden) insbesondere für Anwendungen wie FRAP mit ROI-Bleichen

24. Verwendung von Anordnungen und/ oder Verfahren nach mindestens einem der vorangehenden Ansprüche für die Darstellung molekularer und anderer subzellulärer Wechselwirkungen ,insbesondere der Darstellung sehr kleine Strukturen mit hoher Geschwindigkeit vorzugsweise unter Verwendung indirekter Techniken wie z.B. FRET mit ROI-Bleichen zur Auflösung submolekularar Strukturen

25. Verwendung von Anordnungen und/ oder Verfahren nach mindestens einem der vorangehenden Ansprüche schnellen Signalübertragungsvorgängen , insbesondere neurophysiologischen Vorgängen mit hoher zeitlicher Auflösung, da die durch Ionen vermittelten Aktivitäten sich im Bereich von Hundertstel- bis kleiner als Tausendstelsekunden abspielen, insbesondere bei Untersuchungen im Muskel- oder Nervensystem
